# EUROPEAN PATENT SPECIFICATION

(11) **EP 2 239 530 B1**
(45) Date of publication and mention of the grant of the patent: **06.04.2016**
(21) Application number: 10159324.2
(22) Date of filing: 08.04.2010
(51) Int. Cl.: F28D 7/16

(54) **Multitubular heat exchanger**
Wärmetauscher mit mehreren Rohrleitungen
Échangeur thermique à plusieurs tubes

(30) Priority: 09.04.2009 JP 2009095101
(43) Date of publication of application: 13.10.2010
(73) Proprietor: Maruyasu Industries Co., Ltd., Nagoya-shi Aichi 466-0058 (JP); Honda Motor Co., Ltd., Minato-ku Tokyo 107-8556 (JP)
(72) Inventor: Sakakibara, Yasufumi, Nagoya-shi Aichi 466-0058 (JP); Wajima, Kentaro, Nagoya-shi Aichi 466-0058 (JP); Tsukahara, Kenji, Wako-shi Saitama 351-0193 (JP); Kushima, Satoshi, Wako-shi Saitama 351-0193 (JP); Uehara, Hideyo, Wako-shi Saitama 351-0193 (JP)
(74) Representative: Prüfer & Partner mbB Patentanwälte · Rechtsanwälte

(56) References cited:
- WO-A1-2009/016102
- US-A1- 2003 010 480
- US-A1- 2003 019 616
- US-A1- 2004 035 916
- US-A1- 2007 000 652

## Description

### TECHNICAL FIELD

This invention relates to a heat exchanger for use in an internal combustion engine of an automobile, or the like:

### BACKGROUND ART

Among various types of heat exchanger for use in a gas cooling device (a device for cooling an exhaust gas by a coolant) of an internal combustion engine of an automobile, a multitubular heat exchanger is known in the art (*e.g*., JP 2007-225190 A), which includes a plurality of flat hollow prismatic heat transfer tubes and a casing enclosing the plurality of heat transfer tubes stacked, to transfer heat between a first medium and a second medium, the first medium flowing through the space formed between the casing and the heat transfer tubes, and the second medium flowing through the insides of the heat transfer tubes.

In such a multitubular heat exchanger, a plurality of projections are formed on an outer surface of each of the heat transfer tubes and an inner surface of the casing for the purposes of enhancing the rigidity of the heat transfer tubes and the casing and reducing contact areas of adjacent heat transfer tubes while leaving sufficient clearances between the adjacent heat transfer tubes. Once the heat transfer tubes and the casing are assembled together, each of the projections provided on the inner surface of the casing abuts on the opposed projection of the heat transfer tubes, and the corresponding projections of the adjacent heat transfer tubes abut on each other.

The existing multitubular heat exchanger as described above is manufactured by welding (brazing) temporarily held component parts (*i.e*., the heat transfer tubes and the casing as assembled together), and thus the projections provided on the inner surface of the casing may be joined to the opposed projections of the heat transfer tubes and the projections of the heat transfer tubes may be joined to the corresponding projections of the adjacent heat transfer tubes, as the case may be, by the brazing material flowing due to exposure to elevated temperatures. When the multitubular heat exchanger in which the projections on the inner surface of the casing are joined to the opposed projections of the heat transfer tubes and the projections of the heat transfer tubes are joined to the corresponding projection of the adjacent heat transfer tubes is installed in an internal combustion engine of an automobile, the impacts derived from vibrations or the like of the engine would impose concentrated stress on the joined projections, and could cause cracks in the heat transfer tubes and the casing. In particular, if the heat exchanger has been used for a long period of time, this problem would become conspicuous and nonnegligible.

US 2007/0000652 A1 describes a heat exchanger including a shell having an inner chamber defined by an inside wall surface, and a tube stack disposed within the inner chamber. The tube stack includes a plurality of flat elongated tubes arranged in a stack. A first fluid flow path is defined within the tubes. The tubes each include a plurality of projections projecting outwardly therefrom. The projections on adjacent tubes contact one another, thereby forming a second fluid flow path.

### SUMMARY OF INVENTION

It is an object of the present invention to provide a multitubular heat exchanger which overcomes the aforementioned disadvantages in the existing multitubular heat exchanger in a practical manner, and which includes a casing and heat transfer tubes impervious to being damaged by continuously receiving the shocks such as the vibrations transmitted during the operation of the engine, or the like, over a long period of time.

In one aspect of the present invention, as recited in claim 1, a multitubular heat exchanger is provided which comprises a plurality of flat hollow prismatic heat transfer tubes and a casing enclosing the plurality of heat transfer tubes stacked, to transfer heat between a first medium and a second medium, the first medium flowing through space formed between the casing and the heat transfer tubes, and the second medium flowing through insides of the heat transfer tubes, wherein a plurality of projections are provided dispersedly on an outer surface of each of the heat transfer tubes in predetermined positions, and a plurality of projections are provided dispersedly on an inner surface of the casing in positions corresponding to the predetermined positions, and wherein the projections of the casing are not joined to the projections of the heat transfer tubes, and the projections of the heat transfer tubes are not joined to the projections of the adjacent heat transfer tubes. In defining the present invention, the phrase "not joined to the projections of the heat transfer tubes" refers to the condition such that metal which forms the projections of the heat transfer tubes is not diffusion-bonded to each other or not bonded to each other with brazing material interposed therebetween.

In the above configuration recited in claim 1, a carbonized material is interposed between each projection of the casing and a corresponding projection of the heat transfer tubes, and between each projection of the heat transfer tubes and a corresponding projection of the adjacent heat transfer tubes.

In the above configuration recited in claim 1, additional features as set force in claim 2 may be further provided such that the casing comprises two semitubular outer cases each having an inner surface on which the projections are provided. The casing is formed by combining the outer cases together by welding where a joint inhibitor is applied to surfaces of the projections of each of the outer cases. At the time when the outer cases are welded together, the heat transfer tubes with a joint inhibitor being applied to surfaces of the projections of the heat transfer tubes are stacked, and thereafter welded on an inside of the casing. The joint inhibitor used in defining the present invention may include various kinds of brazing joint inhibiting agent, coatings of acrylic, urethane or other synthetic resins, and the like.

In the multitubular heat exchanger as recited in claim 1, the stress concentration would not take place on the joined projections, because the projections of the casing are not joined to the projections of the heat transfer tubes, and the projections of the heat transfer tubes are not joined to the projections of the adjacent heat transfer tubes. Therefore, the heat transfer tubes are highly unlikely to become damaged even when the multitubular heat exchanger has been continuously receiving the shocks such as vibrations transmitted during the operation of the engine, or the like, for a long period of time.

In the multitubular heat exchanger as recited in claim 1, the adjacent or opposed projections are isolated from each other without fail, because a carbonized material is interposed between each projection of the casing and the corresponding projection of the heat transfer tubes, and between each projection of the heat transfer tubes and the corresponding projection of the adjacent heat transfer tubes. Therefore, the damage to the casing and the heat transfer tubes can be prevented more effectively.

In the multitubular heat exchanger as recited in claim 2, undesirable joining between the projections of the casing and the projections of the heat transfer tubes, and between the projections of the heat transfer tubes and the projections of the adjacent heat transfer tubes is avoided merely by applying the joint inhibitor to surfaces of the projections of the casing and the heat transfer tubes. Therefore, the multitubular heat exchanger can be manufactured easily and inexpensively.

### BRIEF DESCRIPTION OF DRAWINGS

The above aspects, other advantages and further features of the present invention will become more apparent by describing in detail illustrative, non-limiting embodiments thereof with reference to the accompanying drawings, in which:
FIG. 1 is a perspective view showing an outward appearance of a multitubular
FIG. 2 is an exploded view showing component parts of the multitubular heat exchanger;
FIG. 3 is a plan view of a heat transfer tube;
FIG. 4 is an exploded view showing component parts of the heat transfer tube;
FIG. 5 is a sectional view of the multitubular heat exchanger, showing a longitudinal section taken along a vertical plane; and
FIG. 6 is a schematic diagram showing opposed projections each provided on adjacent heat transfer tubes.

### DESCRIPTION OF EMBODIMENT(S)

A multitubular heat exchanger according to an exemplary embodiment of the present invention will be described in detail with reference to the drawings.

### <Structure of Multitubular Heat Exchanger >

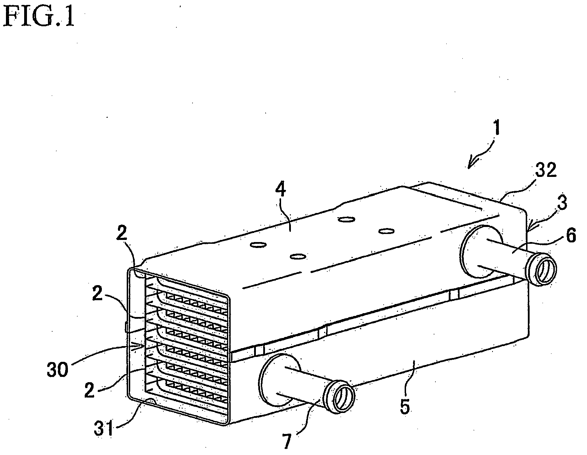

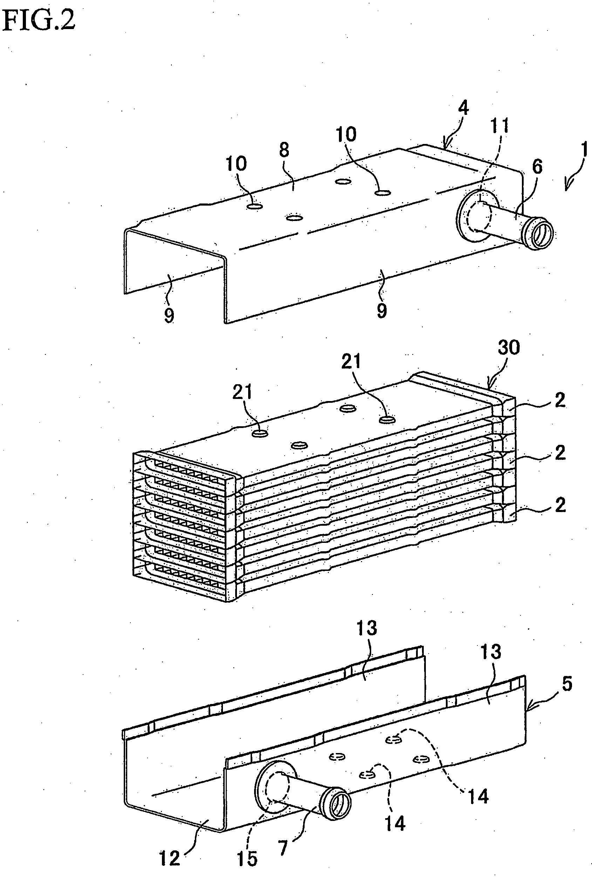

FIG. 1 is a view showing an outward appearance of the multitubular heat exchanger 1 according to the present embodiment, and FIG. 2 is an exploded view showing component parts of the multitubular heat exchanger 1. The multitubular heat exchanger 1 comprises seven heat transfer tubes 2, a casing 3 composed of an upper outer case 4 and a lower outer case 5, an introduction pipe 6 and a discharge pipe 7, all of which are assembled together to form the multitubular heat exchanger 1.

The upper outer case 4 is in a semitubular shape (*i.e.,* the shape of a halved quadrangular prism with a rectangular U-shaped cross section) made of stamped sheet metal (a sheet of stainless steel subjected to presswork), with a substantially rectangular top plate 8 and two side plates 9 extending downward from left and right sides of the top plate 8 in a direction perpendicular to the top plate 8. On the inner surface of the top plate 8, four shortened cylindrical projections 10 protruding downward with the same length are provided. These four projections 10 are arranged regularly such that the positions of the projections 10 coincide with the vertices of an imaginary rectangle. A lower end of each projection 10 has a flat circular face, and a proximal end of the projection 10 has a diameter slightly larger than the lower end face (*i.e.,* the projection 10 is shaped like a truncated cone rather than a cylinder). One of the side plates 9 has a joint hole 11 provided therein, to which the introduction pipe 6 is connected. The joint hole 11 is located in a position near a rear end of the relevant side plate 9.

The lower outer case 5, similar to the upper outer case 4, is in a semitubular shape (*i.e.,* the shape of a halved quadrangular prism with a rectangular U-shaped cross section) made of stamped sheet metal (a sheet of stainless steel subjected to presswork), with a substantially rectangular bottom plate 12 and two side plates 13 extending upward from left and right sides of the bottom plate 13 in a direction perpendicular to the bottom plate 13. The spacing between upper ends of the side plates 13 is slightly broader than the spacing between the side plates 9 of the upper outer case 4. On the inner surface of the bottom plate 12, four shortened cylindrical projections 14 protruding upward with the same length, similar to the projections 10 on the upper outer case 4, are provided. These four projections 14 are arranged regularly such that the positions of the projections 14 correspond to the positions of the projections 10 on the upper outer case 4. One of the side plates 13 has a joint hole 15 provided therein, to which the discharge pipe 7 is connected. The joint hole 15 is located in a position near a front end of the relevant side plate 13.

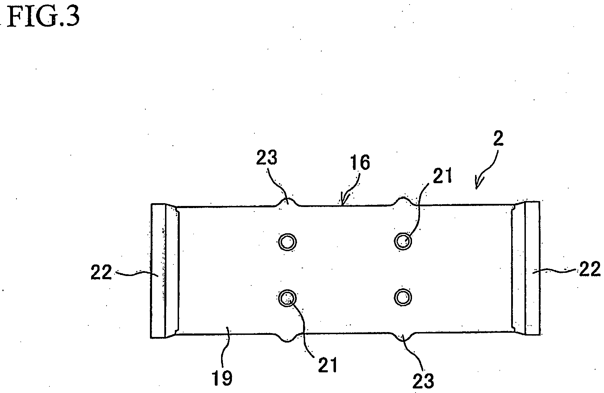

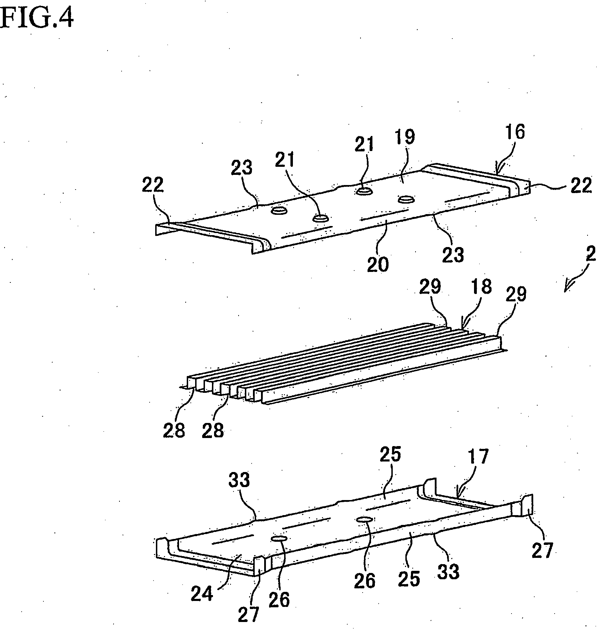

FIG. 3 shows a plan view of each heat transfer tube 2, and FIG. 4 is an exploded view showing component parts of each heat transfer tube 2. Each heat transfer tube 2 comprises an upper case 16, a lower case 17 and a radiating fin 18, all of which are assembled together to form the heat transfer tube 2.

The upper case 16 is in a shape of a flat halved quadrangular prism with a rectangular U-shaped cross section, and is made of stamped sheet metal (a sheet of stainless steel subjected to presswork), with a substantially rectangular top plate 19 and sidewalls 20 extending downward from left and right sides of the top plate 19 in a direction perpendicular to the top plate 19. On the outer surface of the top plate 19, four shortened cylindrical projections 21 protruding upward with the same length are provided. These four projections 21 are arranged regularly such that the positions of the projections 21 coincide with the vertices of an imaginary rectangle. The shape of each projection 21 is substantially the same as those of the projections 10 on the upper outer case 4 and the projections 14 on the lower outer case 5. Bulged portions 22 protruding outward with the same length as that of each projection 21 are formed at the front and rear edges of the top plate 19 and the sidewalls 20. The projections 21 are arranged in a way similar to that in which the projections 10 on the upper outer case 4 and the projections 14 on the lower outer case 5 are arranged. Additionally, bulged stopper portions 23 are formed at two spots, front and rear, of each sidewall 20 so that the upper case 16 will not be misaligned with the lower case 17 when the upper case 16 is overlaid on the lower case 17.

The lower case 17, similar to the upper case 16, is in a shape of a flat halved quadrangular prism with a rectangular U-shaped cross section, and is made of stamped sheet metal (a sheet of stainless steel subjected to presswork), with a substantially rectangular bottom plate 24 and sidewalls 25 extending upward from left and right sides of the bottom plate 24 in a direction perpendicular to the bottom plate 24. The spacing between the sidewalls 25 of the lower case 17 is slightly narrower than the spacing between the sidewalls 20 of the upper case 16. On the outer surface of the bottom plate 24, four shortened cylindrical projections 26 protruding downward with the same length, similar to the projections 21 on the upper case 16, are provided. These four projections 26 are arranged regularly such that the positions of the projections 26 correspond to the positions of the projections 21 on the upper case 16. The shape of each projection 26 is substantially the same as those of the projections 21 on the upper case 16, the projections 10 on the upper outer case 4 and the projections 14 on the lower outer case 5. Bulged portions 27 protruding outward with the same length as that of each projection 26 are formed at the front and rear edges of the bottom plate 24 and the sidewalls 25. Furthermore, bulged stopper portions 33 are formed at two spots, front and rear, of each sidewall 25 so that the bulged stopper portions 33 are aligned with the bulged stopper portions 23 of the upper case 16 when the upper case 16 is overlaid on the lower case 17.

The radiating fin 18 is shaped generally like a flat plate having streaks or corrugation composed of a number of alternate grooves 28 and ridges 29 continuously arranged laterally, and is made of stamped sheet metal (a sheet of stainless steel subjected to presswork). On each of the grooves 28 and the ridges 29, a number of protruding pieces (not shown) for enhancing the efficiency of heat transfer are provided which protrude inwardly.

### <Assembly of Component Parts of Multitubular Heat Exchanger >

To assemble the multitubular heat exchanger 1, first, each of the heat transfer tubes 2 is formed by assembling the upper case 16, the lower case 17 and the radiating fin 18, then, a heat transfer tube stack 30 is formed by stacking and temporarily holding the thus-formed heat transfer tubes 2, and the casing 3 with the heat transfer tube stack 30 stored therein is formed by welding (brazing) the upper outer case 4 and the lower outer case 5 together while welding (brazing) the assembled component parts of the heat transfer tube stack 30.

In order to assemble each heat transfer tube 2, first, a joint inhibitor (e.g., an agent made of acrylic or urethane resin) is applied, with a predetermined thickness (0.1 µm to 100 µm), to the surfaces of the projections 21 on the upper case 16 and the projections 26 on the lower case 17 of each heat transfer tube 2. Next, the radiating fin 18 of which the bottom surfaces of the grooves 28 and the top surfaces of the ridges 29 are coated with a brazing material such as copper, nickel, etc. is put on the bottom plate 24 of the lower case 17, and the upper case 16 is fitted on the lower case 17 in such a manner that the sidewalls 20 of the upper case 16 are located on the outsides of the sidewalls 25 of the lower case 17. A brazing material is then applied between each sidewall 20 of the upper case 16 and the corresponding sidewall 25 of the lower case 17. In this way, each of the heat transfer tubes 2 is assembled from component parts into an integral unit. Thereafter, the heat transfer tubes 2 are stacked and temporarily held to form the heat transfer tube stack 30. When the heat transfer tubes 2 are stacked, a brazing material is applied to the outsides of the bulged portions 22 of the upper case 16 and the bulged portions 27 of the lower case 17.

After the heat transfer stack 30 is formed in such a manner as described above, the upper outer case 4 and the lower outer case 5 are welded (brazed) to form the casing 3, in which the heat transfer tube stack 30 is incorporated. When the upper outer case 4 and the lower outer case 5 are brazed together, a joint inhibitor as applied to the projections 21 on the upper case 16 and the projections 26 on the lower case 17 is applied to the surfaces of the projections 10 on the upper outer case 4 and the projections 14 on the lower outer case 5.

To be more specific, the heat transfer tube stack 30 is placed inside the lower outer case 5, and the upper outer case 4 is fitted in lower outer case 5 in such a manner that the side plates 9 of the upper outer case 4 are located on the insides of the side plates 13 of the lower outer case 5. A brazing material is then applied between each side plate 9 of the upper outer case 4 and the corresponding side plate 13 of the lower outer case 5, whereby the casing 3 is assembled from component parts into an integral unit with the heat transfer tube stack 30 being incorporated inside the casing 3. Further, the introduction pipe 6 having a brazing material applied to its connecting end is fitted to the joint hole 11 provided in one of the side plates 9 of the upper outer case 4, and the discharge pipe 7 having a brazing material applied to its connecting end is fitted to the joint hole 15 provided in one of the side plates 13 of the lower outer case 5. In this way, the preliminary assembly of the multitubular heat exchanger 1 is completed.

The thus-tentatively assembled multitubular heat exchanger 1 is placed in a furnace and left in the reducing atmosphere at a predetermined temperature for a predetermined period of time, and then cooled for a predetermined period of time, so that the brazing materials applied to the respective component parts are molten and solidified (brazing step). By following this brazing step, in each of the heat transfer tubes 2, the upper case 16, the lower case 17 and the radiating fin 18 are welded together. Also, in the heat transfer tube stack 30, each bulged portion 27 of the lower case 17 of one (first) heat transfer tube 2 located on top of another (second heat transfer tube 2) and the corresponding bulged portion 22 of the upper case 16 of the second transfer tube 2 located directly under the first heat transfer tube 2 are welded together. Further, each bulged portion 22 of the upper case 16 of the uppermost heat transfer tube 2 and each bulged portion 27 of the lower case 17 of the lowermost heat transfer tube 2 are welded to the inner surface of the upper outer case 4 and the inner surface of the lower outer case 5, respectively. In addition, the introduction pipe 6 and the discharge pipe 7 are welded to the side plate 9 of the upper outer case 4 and the side plate 13 of the lower outer case 5, respectively. Consequently, the heat transfer tube stack 30 is enclosed inside the casing 3 in a gastight state.

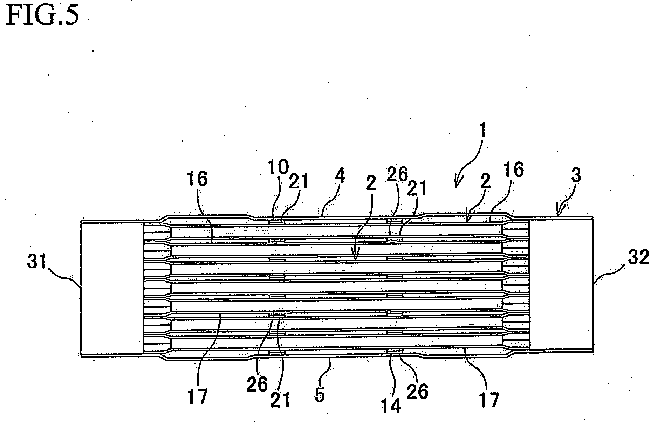

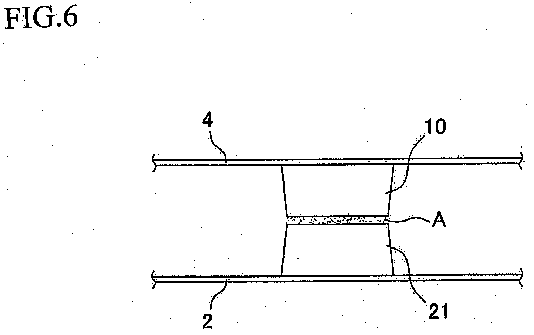

When the brazing process is carried out, as described above, pairs of the corresponding projections provided on adjacent heat transfer tubes 2 (*i.e.,* each projection 26 on the lower case 17 of one heat transfer tube 2 located on top of another heat transfer tube 2 and a corresponding projection 21 on the upper case 16 of the latter heat transfer tube 2 located under the former heat transfer tube 2) are located adjacent to each other; the projections 21 on the upper case 16 of the uppermost heat transfer tube 2 and the corresponding projections 10 on the upper outer case 4 of the casing 3, as well as the projections 26 on the lower case 17 of the lowermost heat transfer tube 2 and the corresponding projections 14 on the lower outer case 5 of the casing 3, are located adjacent to each other, respectively (*see* FIG. 5). However, since the projections 21 on the upper case 16 of each heat transfer tube 2, the projections 26 on the lower case 17 of each heat transfer tube 2, the projections 10 on the upper outer case 4 of the casing 3, and the projections 14 on the lower outer case 5 of the casing 3 have been all coated with the joint inhibitor before the brazing process, a carbonized joint inhibitor A resulting from exposure of high-temperature atmosphere is interposed at interfaces of or between (opposed faces of) the corresponding adjacent projections, as shown in FIG. 6, after the brazing process. Therefore, these adjacent projections are not joined to each other.

### <Operation of Multitubular Heat Exchanger >

In the multitubular heat exchanger formed in such a way as described above, a medium (*e.g.,* exhaust gas) introduced from an introduction port 31 provided at a front end of the casing 3 flows through the insides of the heat transfer tubes 2 which make up the heat transfer tube stack 30, and is discharged through a discharge port 32 provided at a rear end of the casing 3 to the outside. On the other hand, a medium (*e.g.,* cooling water) introduced through the introduction pipe 6 flows through spaces between the casing 3 and the heat transfer tube stack 30 and spaces among the heat transfer tubes which make up the heat transfer tube stack 30, and is discharged through the discharge pipe 7 to the outside. During a period of time when the aforementioned media of two different kinds are flowing through the multitubular heat exchanger 1, an efficient heat exchange takes place (*e.g.,* exhaust gas flowing through the casing 3 is efficiently cooled). Accordingly, the multitubular heat exchanger 1 may be used in the exhaust gas recirculation or EGR system provided in an automobile, wherein part of exhaust gas is introduced from an exhaust manifold of the automobile into the multitubular heat exchanger 1 is cooled to a predetermined temperature so that the exhaust gas thus cooled (the so-called EGR gas) can be discharged through an EGR valve to the intake manifold.

### <Advantages of Multitubular Heat Exchanger >

The multitubular heat exchanger 1 is configured, as described above, such that a plurality of projections (projections 21 and projections 26) are provided dispersedly on an outer surface of each of the heat transfer tubes 2 in predetermined positions, and a plurality of projections (projections 10 and projections 14) are provided dispersedly on an inner surface of the casing 3 in positions corresponding to the predetermined positions, and that the projections (projections 10 and projections 14) of the casing 3 are not joined to the projections (projections 21 and projections 26, respectively) of the heat transfer tubes 2, and the projections (projections 21 and projections 26) of the heat transfer tubes 2 are not joined to the projections (projections 26 and projections 21, respectively) of the adjacent heat transfer tubes 2. Therefore, the casing 3 and the heat transfer tubes 2 of the multitubular heat exchanger 1 is impervious to being damaged by continuously receiving the shocks such as the vibrations transmitted during the operation of the engine, or the like, over a long period of time.

Moreover, the multitubular heat exchanger 1 is configured such that a carbonized material is interposed between each of the projections (projections 10 on upper outer case 4; projections 14 on lower outer case 5) of the casing 3 and the corresponding projection (projections 21 on upper case 16; projections 26 on lower case 17) of the heat transfer tubes 2, and between each projection of the heat transfer tubes 2 and the corresponding projection of the adjacent heat transfer tubes 2 (projections 26 on lower case 17 of heat transfer tubes 2 on top of adjacent heat transfer tubes 2 and corresponding projections 21 on upper case 16 of those adjacent heat transfer tubes 2). Therefore, the adjacent projections are isolated from each other without fail, and thus the damage to the casing 3 and the heat transfer tubes 2 can be prevented more effectively.

Furthermore, undesirable joining between the projections of the casing 3 and the adjacent projections of the heat transfer tubes 2, and between the projections of the heat transfer tubes 2 and the corresponding projections of the adjacent heat transfer tubes 2 is avoided merely by applying the joint inhibitor to surfaces of the projections (projections 10 on upper outer case 4 and projections 14 on lower outer case 5) of the casing 3 and the projections (projections 21 on upper case 16 and projections 26 on lower case 17) of the heat transfer tubes 2. Therefore, the multitubular heat exchanger 1 can be manufactured easily and inexpensively.

### <Modified Embodiments of Multitubular Heat Exchanger >

Structure of the multitubular heat exchanger consistent with the present invention is not limited to the above-described embodiment, various modifications and changes may be made where appropriate on an as needed basis to the material, shape and structure of the heat transfer tubes (the upper case, the lower case, the radiating fin, etc.), casing (the upper outer case, the lower outer case, etc.) and other components thereof, in accordance with the present invention without departing from the scope thereof.

For example, the material of the heat transfer tubes and the casing in a multitubular heat exchanger according to the present invention is not limited to the stainless steel as in the exemplary embodiment described above, but all or part of the heat transfer tubes and the casing may be made of any other metal. The number of the heat transfer tubes making up the heat transfer tube stack in a multitubular heat exchanger according to the present invention is not limited to seven as in the exemplary embodiment described above, but six or less or eight or more heat transfer tubes may be stacked to form a heat transfer tube stack incorporated in a casing of the multitubular heat exchanger.

Furthermore, the number of projections provided on the upper and lower cases of the heat transfer tubes and on the upper and lower outer cases of the casing is not limited to four as in the exemplary embodiment described above, but three or less or five or more projections may be provided on each component. The shape of the projections is also not limited to that of a shortened cylinder or a truncated cone, but any modified shape may be applied such as the form of a shortened prism or a shortened elliptic cylinder or the like. In addition, arrangement of the projections may not be such that that the positions of the projections 10 coincide with the vertices of an imaginary rectangle, as in the exemplary embodiment described above; any other arrangement may be adopted, such as a lattice pattern and a staggered arrangement.

## Claims

1. A multitubular heat exchanger (1) comprising a plurality of flat hollow prismatic heat transfer tubes (2) and a casing (3) enclosing the plurality of heat transfer tubes (2) stacked, to transfer heat between a first medium and a second medium, the first medium flowing through space formed between the casing (3) and the heat transfer tubes (2), and the second medium flowing through insides of the heat transfer tubes (2), the multitubular heat exchanger (1) having
a plurality of projections (21, 26) being provided dispersedly on an outer surface of each of the heat transfer tubes (2) in predetermined positions,
a plurality of projections (10, 14) being provided dispersedly on an inner surface of the casing (3) in positions corresponding to the predetermined positions, **characterized in that**
a carbonized material is interposed between each projection (10, 14) of the casing (3) and a corresponding projection (21, 26) of the heat transfer tubes (2), and between each projection (21, 26) of the heat transfer tubes (2) and a corresponding projection (21, 26) of the adjacent heat transfer tubes (2) and **in that**
the projections (10, 14) of the casing (3) are not joined to the projections (21, 26) of the heat transfer tubes (2), and the projections (21, 26) of the heat transfer tubes (2) are not joined to the projections (21, 26) of the adjacent heat transfer tubes (2).

2. The multitubular heat exchanger (1) according to claim 1, wherein the casing (3) comprises two semitubular outer cases (4, 5) each having an inner surface on which the projections (10, 14) are provided, and is formed by combining the outer cases (4, 5) together by brazing performed with a joint inhibitor being applied to surfaces of the projections (10, 14) of each of the outer cases, and
wherein the stacked heat transfer tubes (2) are brazed on an inside of the casing (3) when the outer cases (4, 5) are brazed together, in a state where a joint inhibitor is applied to surfaces of the projections (21, 26) of the heat transfer tubes (2), such that the joint inhibitor becomes carbonized.

## Patentansprüche

1. Wärmetauscher (1) mit mehreren Rohrleitungen aufweisend eine Vielzahl an flachen, hohlen prismatischen Rohrleitungen (2) zur Wärmeübertragung und einem Mantel (3), der die Vielzahl an übereinander angeordneten Rohrleitungen (2) zur Wärmeübertragung umschließt, um Wärme von einem ersten Medium auf ein zweites Medium zu übertragen, eines ersten Mediums, dass durch den Raum zwischen dem Mantel (3) und den Rohrleitungen (2) zur Wärmeübertragung fließt, und eines zweiten Mediums, dass das Innere der Rohrleitungen (2) durchströmt, wobei der Wärmetauscher (1) mit mehreren Rohrleitungen hat
eine Vielzahl von Auskragungen (21, 26), die verteilt an einer äußeren Oberfläche jeder Rohrleitung (2) zur Wärmeübertragung an festgelegten Stellen vorliegen
eine Vielzahl von Auskragungen (10, 14), die verteilt an einer inneren Oberfläche des Mantels (3) entsprechend zu den zuvor festgelegten Stellen vorliegen,
**dadurch gekennzeichnet, dass** ein karbonisiertes Material, das zwischen jeder Auskragung (10, 14) des Mantels (3) und der Auskragung (21, 26) der Rohrleitungen (2) zur Wärmeübertragung sowie zwischen jeder Auskragung (21, 26) der Rohrleitungen (2) zur Wärmeübertragung und der zugehörigen Auskragung (21, 26) der angrenzenden Rohrleitungen (2) eingefügt ist, und dass
die Auskragungen (10, 14) des Mantels (3) nicht mit den Auskragungen (21, 26) der Rohrleitungen (2) zur Wärmeübertragung verbunden sind und die Auskragungen (21, 26) der Rohrleitungen (2) zur Wärmeübertragung nicht mit den Auskragungen (21, 26) angrenzender Rohrleitungen (2) verbunden sind.

2. Wärmetauscher (1) mit mehreren Rohrleitungen gemäß Anspruch 1, wobei der Mantel (3) zwei rohrhälftenförmige äußere Mantelteile (4,5) aufweist, die jeweils eine innere Oberfläche mit Auskragungen (10, 14) aufweisen und der durch Zusammenfügen der äußeren Mantelteile (4,5) durch Löten, das mit Aufbringung eines Mittels zur Verhinderung der Anhaftung auf die Oberfläche der Auskragungen jedes der äußeren Mantelteile durchgeführt wird, und
wobei die übereinander angeordneten Rohrleitungen (2) zur Wärmeübertragung an einer Innenseite des Mantels (3) angelötet werden, wenn die äußeren Mantelteile (4,5) zusammengelötet werden, in einem Zustand, in dem ein Mittel zur Verhinderung der Anhaftung auf die Oberflächen der Auskragungen (21, 26) der Rohrleitungen (2) zur Wärmeübertragung angebracht wird, so dass der Zusatz zur Verhinderung der Anhaftung karbonisiert wird.

## Revendications

1. Echangeur thermique à plusieurs tubes (1) comprenant une pluralité de tubes de transfert de chaleur prismatiques creux et plats (2) et un boîtier (3) renfermant la pluralité de tubes de transfert de chaleur (2) empilés, afin de transférer de la chaleur entre un premier milieu et un second milieu, le premier milieu circulant à travers un espace formé entre le boîtier (3) et les tubes de transfert de chaleur (2), et le second milieu circulant par l'intérieur des tubes de transfert de chaleur (2), l'échangeur de chaleur à plusieurs tubes (1) comportant :
une pluralité de saillies (21, 26) qui sont agencées de manière dispersée sur une surface externe de chacun des tubes de transfert de chaleur (2) à des positions prédéterminées,
une pluralité de saillies (10, 14) qui sont agencées de manière dispersée sur une surface interne du boîtier (3) à des positions correspondant aux positions prédéterminées, **caractérisé en ce que**
un matériau carbonisé est interposé entre chaque saillie (10, 14) du boîtier (3) et une saillie correspondante (21, 26) des tubes de transfert de chaleur (2), et entre chaque saillie (21, 26) des tubes de transfert de chaleur (2) et une saillie correspondante (21, 26) des tubes de transfert de chaleur adjacents (2) et **en ce que**
les saillies (10, 14) du boîtier (3) ne sont pas reliées aux saillies (21, 26) des tubes de transfert de chaleur (2), et les saillies (21, 26) des tubes de transfert de chaleur (2) ne sont pas reliées aux saillies (21, 26) des tubes de transfert de chaleur adjacents (2).

2. Echangeur thermique à plusieurs tubes (1) selon la revendication 1, dans lequel le boîtier (3) comprend deux boîtiers externes semi-tubulaires (4, 5) chacun présentant une surface interne sur laquelle les saillies (10, 14) sont agencées, et est formé en associant les boîtiers externes (4, 5) entre eux par brasage mis en oeuvre avec un inhibiteur de soudure qui est appliqué sur des surfaces des saillies (10, 14) de chacun des boîtiers externes, et
dans lequel les tubes de transfert de chaleur empilés (2) sont brasés sur une partie interne du boîtier (3) lorsque les boîtiers externes (4, 5) sont brasés entre eux, dans un état dans lequel un inhibiteur de soudure est appliqué sur les surfaces des saillies (21, 26) des tubes de transfert de chaleur (2), de telle sorte que l'inhibiteur de soudure se carbonise.
